# EUROPEAN PATENT APPLICATION

(11) **EP 4 451 764 A1**
(43) Date of publication of application: **23.10.2024**
(21) Application number: 22905639.5
(22) Date of filing: 28.01.2022
(51) Int. Cl.: H04W 72/04

(54) **WIRELESS COMMUNICATION METHOD AND APPARATUS, AND DEVICE AND STORAGE MEDIUM**

(30) Priority: 15.12.2021 CN 202111539503
(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN)
(74) Representative: Richards, John
(86) International application number: PCT/CN2022/074785
(87) International publication number: WO 2023/108867

(57) **Abstract**

This application provides a wireless communication method, apparatus, device, and storage medium. The method comprises: when a first terminal device transmits SL data on randomly selected time-frequency resource blocks, monitoring feedback information on SL HARQ containing NACK feedback count on PSFCH. When the NACK feedback count in the feedback information is detected to be greater than the first threshold, the L1 priority of SL data is increased based on the NACK feedback count to obtain an updated L1 priority value. A network device sends an SCI to a second terminal device, where the SCI carries the updated L1 priority value. The SCI is used to indicate the second terminal device to re-determine the resource selection method for the second terminal device based on the updated L1 priority value, so that the time-frequency resource block selected by the second terminal device according to the re-determined resource selection method is different from the time-frequency resource block currently selected by the first terminal device.

## Description

The application was submitted to the Chinese Patent Office on December 15, 2021, with the priority number 202111539503.2, and the application name is "method, device, equipment and storage medium for wireless communication". All content is incorporated by reference in this application.

### Technical Field

The application relates to the field of communication technology, particularly to a method, device, equipment and storage medium for wireless communication.

### Background Art

With the rapid development of the demand for Vehicle to Everything (V2X), the Third Generation Partner Project (3GPP) has also begun to develop NR V2X standard protocols under the 5G NR system framework. 3GPP has categorized four major use case groups for 5G V2X, including: automatic queuing driving, support for extended sensing, semi-automatic or full automatic driving, and remote driving. When a V2X User Equipment (UE) resides in a cell, the V2X UE will use the Sidelink (SL) resource pool configured by the current cell for data transmission. When the V2X UE is outside of cell coverage, the V2X UE will use a pre-configured SL resource pool for data transmission.

In the LTE V2X system, the SL resource pool can comprise a RX resource pool, a TX resource pool, and an exceptional TX resource pool. When LTE V2X UE selects resources from the TX resource pool for SL transmission, it first senses the TX resource pool by monitoring the occupancy of different time-frequency resources in the TX resource pool over a period of time (sensing time window). The sensing results are used to select currently unoccupied or higher-quality time-frequency resources from the TX resource pool within the resource selection time window for SL transmission, thereby reducing the probability of persistent conflicts caused by different V2X UEs simultaneously selecting the same resource. Therefore, when changes occur in the TX resource pool, all V2X UEs need to perform re-sensing of the modified TX resource pool. In order to minimize transmission interruptions caused by V2X UE waiting for the sensing result, the base stations usually provide an exceptional TX resource pool. When LTE V2X UE uses the time-frequency resources in the exceptional TX resource pool, it only needs to randomly select from it, without the need to sense the exceptional TX resource pool for a period of time. However, because there is no sensing process, using time-frequency resources within the exceptional TX resource pool for transmission can lead to severe conflicts, resulting in significantly lower transmission performance compared to using the TX resource pool.

In the LTE V2X system, the resource selection based on sensing and the random resource selection (RRS) work in different resource pools, so there is no mutual influence. In the NR V2X system, 3GPP has agreed that the UE selects resources based on sensing and the UE selects resources randomly can share the same resource pool. Therefore, the UE who selects resources randomly cannot monitor and avoid potential resource collisions due to no execution of sensing. On the other hand, for the UE who selects resources based on sensing, when it is found that the priority of the data being transmitted on the monitored time-frequency resource is lower than the priority of the data of the sensing-UE, the sensing-UE will seize t time-frequency resource for its own data transmission, which will cause persistent resource collisions and continuous packet loss between two the UEs.

### SUMMARY

### Technical issues

This application embodiment provides a method, device, equipment and storage medium for wireless communication, which effectively prevent persistent resource collisions and enhance the transmission efficiency of resource pools.

### Technical solutions

In the first aspect, the application provides a method for wireless communication, comprising: when the first terminal device sends SL data on a randomly selected time-frequency resource block, it monitors the feedback information of the sidelink mixed automatic retransmission request SL HARQ on the physical sidelink feedback channel PSFCH, and the feedback information of the SL HARQ comprises the number of feedbacks of the NACK; When it is detected that the number of NACK feedbacks in the feedback information is greater than the first threshold, the first layer (L1) priority of the SL data is increased based on the number of NACK feedbacks, and the updated L1 priority value is obtained; sidelink control information SCI is sent to the second terminal device through network devices, and SCI also carries the updated L1 priority value. SCI is used to indicate that the second terminal device re-determines the resource selection method of the second terminal device based on the updated L1 priority value, and make the time-frequency resource block selected by the second terminal device based on the redetermined resource selection method different from the currently time-frequency resource block randomly selected by the first terminal device.

In the second aspect, the application provides a method for wireless communication, which comprises the following steps: it receives SCI sent by the first terminal device through network devices, SCI carries the updated L1 priority value of the SL data sent by the first terminal device, and when the updated L1 priority value is the SL data sent by the first terminal device on the randomly selected time-frequency resource block, and the number of NACK feedbacks in the feedback information of the sidelink mixed automatic retransmission request SLHARQ is detected to be greater than the first threshold, it is obtained by increasing the L1 priority of SL data based on the number of NACK feedbacks. It redetermines the resource selection method of the second terminal device based on the updated L1 priority value, so that the time-frequency resource block selected by the second terminal device according to the redetermined resource selection method is different from the current time-frequency resource block randomly selected by the first terminal device

In the third aspect, the application provides a device for wireless communication, comprising the following:
a monitoring unit, which is used to monitor the feedback information of the sidelink mixed automatic retransmission request SL HARQ on the physical sidelink feedback channel PSFCH when the first terminal device sends SL data on a randomly selected time-frequency resource block. The feedback information of the SL HARQ comprises the number of NACK feedbacks;
a first processing unit, which is used to increase the L1 priority of SL data based on the number of NACK feedbacks when it is detected that the number of NACK feedbacks in the feedback information exceeds the first threshold, and then the updated L1 priority value is obtained;
and a sending unit, which sends SCI to a second terminal device through network devices, SCI carries the updated L1 priority value, and SCI is used to indicate that the second terminal device redetermines the resource selection method of the second terminal device based on the updated L1 priority value. This ensures that the time-frequency resource block selected by the second terminal device using the redefined resource selection method is different from the one currently selected randomly by the first terminal device.

In the fourth aspect, the application provides a device for wireless communication, comprising the following:
a receiving unit, which is used to receive SCI sent by the first terminal device through network devices, SCI carries the updated L1 priority value of the SL data sent by the first terminal device, and when the updated L1 priority value is the SL data sent by the first terminal device on the randomly selected time-frequency resource block, the number of feedbacks for the NACK in the feedback information of the detected sidelink mixed automatic retransmission request SLHARQ exceeds the first threshold, it is obtained by increasing the L1 priority of SL data based on the number of NACK feedbacks;
and a second processing unit, which is used to redetermine the resource selection method of the second terminal device based on the updated L1 priority value. This ensures that the time-frequency resource block selected by the second terminal device using the redefined resource selection method is different from the one currently selected randomly by the first terminal device.

In the fifth aspect, the application provides a terminal device, which comprises a processor and a memory. The memory is used to store computer programs, and the processor is used to call and run the computer programs stored in the memory, and execute the method for wireless communication described in the first or second aspect above.

In the sixth aspect, the application provides a chip, which comprises a processor used to call and run the computer programs from the memory, so that the device with the chip can execute the method for wireless communication described in the first or second aspect.

In the seventh aspect, the application provides a computer-readable storage medium which stores computer programs suitable for loading by the processor to execute method for wireless communication as described in the first or second aspect.

\In the eighth aspect, the application provides a computer program product comprising computer program instructions that enable the computer to execute the method for wireless communication described in the first or second aspect.

In the ninth aspect, the application provides a computer program. When the computer program runs on a computer, the computer executes the method for wireless communication described in the first or second aspect.

### Advantages

The embodiments of the application provide a wireless communication method, apparatus, device, and storage medium. When the first terminal device sends SL data on a randomly selected time-frequency resource block, it monitors the feedback information of SL HARQ on PSFCH, where the feedback information comprises NACK feedback counts. When it detects that the NACK feedback count in the feedback information exceeds a first threshold, it increases the L1 priority of the SL data based on the NACK feedback count, resulting in an updated L1 priority value. Through network equipment, it sends sidelink control information (SCI) to the second terminal device, with the SCI carrying the updated L1 priority value. SCI indicates that the second terminal device should re-determine its resource selection method based on the updated L1 priority value. This ensures that the second terminal device selects time-frequency resource blocks that are different from those randomly selected by the first terminal device, thus avoiding resource conflicts and improving resource pool transmission efficiency. The embodiment of the application adjusts the priority of data sent by the first terminal device based on the NACK feedbacks of SL HARQ feedback information, so that the second terminal device redetermines the resource selection method of the second terminal device based on the updated L1 priority value, so that the resources selected by the second terminal device avoid conflicts with the resource selection of the first terminal device, and then the first terminal device can complete the transmission as soon as possible, releasing the resources occupied by the first terminal device as soon as possible and effectively avoiding persistent resource collisions and improving the transmission efficiency of the resource pool.

### Figures

In order to clarify the technical solutions in the embodiments of the application, the following brief introduction of the drawings required for the description of the embodiments will be provided. It is evident that the drawings presented below are only a few examples of the application, and those skilled in the art can obtain other drawings based on these drawings without any creative effort.
Figure 1 is the schematic diagram of the structure of the communication system provided in the embodiment of the application.
Figure 2 is the flowchart of the method for wireless communication provided in the embodiment of the application.
Figure 3 is the schematic diagram of the scenario of the method for wireless communication provided in the embodiment of the application.
Figure 4 is another flowchart of the method for wireless communication provided in the embodiment of the application.
Figure 5 is the schematic diagram of the structure of the device for wireless communication provided in the embodiment of the application.
Figure 6 is the schematic diagram of another structure of the device for wireless communication provided in the embodiment of the application.
Figure 7 is a schematic diagram illustrating the structure of the terminal device provided in this application's embodiment.
Figure 8 is the schematic diagram of the structure of the device provided in the embodiment of the application.

### Detailed Description of the Invention

The technical solutions in the embodiments of the application will be clearly and completely described in combination with the figures in the embodiments of the application in the following. Obviously, the described embodiments are only part of the embodiments of the application, but not all of them. Based on the embodiments of the application, all other embodiments obtained by technicians in the art without making any creative labor shall fall within the scope of protection of the application.

The embodiment of the application can be applied to various communication systems, such as Global System of Mobile Communication (GSM), Code Division a plurality of Access (CDMA) system, Broadband Code Division a plurality of Access (WCDMA) system, General Packet Radio Service (GPRS), Long Term Evolution (LTE) system, Advanced Long Term Evolution (LTE-A) system, NR system, evolution system of NR system, LTE (LTE-based access to unlicensed spectrum, LTE-U) systems on unlicensed spectrum, NR (NR-U) system on unlicensed spectrum, Universal Mobile Telecommunications System (UMTS) Wireless Local Area Networks (WLAN), Wireless Fidelity (WiFi), next-generation communication system or any other communication systems.

For example, the communication system not only supports traditional communication, but also supports Device to Device (D2D) communication, Machine to Machine (M2M) communication, Machine Type Communication (MTC), and Vehicle to Vehicle (V2V) communication. The embodiments of the application can also be applied to these communication systems.

In some embodiments, the communication system in the embodiment of the application can be applied to carrier aggregation (CA) scenarios, dual connectivity (DC) scenarios, and Standalone (SA) deployment scenarios.

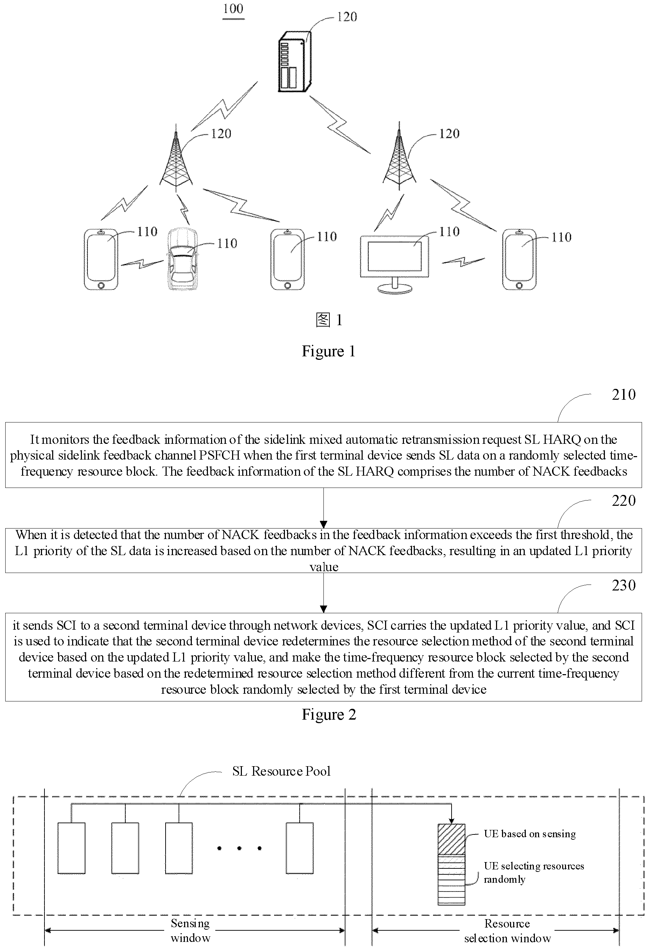

Please refer to Figure 1, Figure 1 is the schematic diagram of the structure of the system for communication provided in the embodiment of the application. The communication system 100 may comprise a plurality of terminal devices 110 and a plurality of network devices 120, the network devices 120 can provide communication coverage for specific geographic areas and communicate with the terminal devices 110 located within that coverage area. Figure 1 illustrates three network devices and five terminal devices in an exemplary manner. The communication system may comprise a plurality of network devices, and the coverage range of each network device may comprise other numbers of terminal devices, which is not limited by the embodiment of the application.

Among them, the terminal devices 110 can also be referred to as user equipment (UE), access terminal, user unit, user station, mobile station, mobile platform, remote station, remote terminal, mobile device, user terminal, terminal, wireless communication device, user agent or user device, etc. The terminal device 110 can be Stations (ST) in WLAN, including cellular phones, cordless phones, Session Initiation Protocol (SIP) phones, Wireless Local Loop (WLL) stations, Personal Digital Assistant (PDA) devices, handheld devices with wireless communication capabilities, computing devices, or other processing devices connected to wireless modems, vehicle mounted devices, wearable devices, and next-generation communication systems, such as terminal devices in NR networks or terminal devices in future evolving Public Land Mobile Network (PLMN) networks.

As an example, but not limited to this, the terminal device 110 may also be a wearable device. Wearable devices, also known as wearable smart devices, are a general term for the wearable devices designed and developed intelligently using wearable technology for daily wear, such as glasses, gloves, watches, clothing and shoes.

For example, the terminal device 110 can also be a device for unmanned aerial vehicles.

For example, it can be considered as an onboard terminal device, also known as an on-board unit (OBU) if located on a vehicle (such as placed or installed inside the vehicle). The terminal device 110 can also be a vehicle mounted terminal device, for example, it can be a vehicle mounted computer with wireless communication function, or a wireless user device connected to an external vehicle mounted computer.

For example, the terminal device 110 can also be a roadside device, such as a streetlight, signal light or other roadside device with wireless communication function.

The network devices 120 can be devices used for communication with mobile devices. It can be an Access Point (AP) in WLAN, a Base Transceiver Station (BTS) in GSM or CDMA, a NodeB (NB) in WCDMA, an Evolutionary Node B (eNB or eNodeB) in LTE, a relay station or access point, or an onboard device, a wearable device, a network device or base station (gNB) in NR networks, or a network device in future evolving PLMN network.

The network devices 120 comprise access network (AN) devices, such as base stations (e.g. access points), and can refer to devices in the access network that communicate with wireless terminal devices through one or a plurality of cells at the air interface, or in a Vehicle to Everything (V2X) technology, the network device is a Road Side Unit (RSU). The base station can be used to convert received aerial frames into Internet Protocol (IP) packets, serving as a router between terminal devices and the rest of the access network, which may comprise the IP networks. RSU can be a fixed infrastructure entity that supports V2X applications and can exchange messages with other entities that support V2X applications. The network devices can also coordinate the attribute management of air interfaces. The embodiments of this application do not impose specific limitations.

In the context of V2X, in versions (Rel)-14/15/16, V2X has been approved as a significant application of Device-to-Device (D2D) technology. V2X optimizes the specific application requirements of V2X based on the existing D2D technology, further reducing the access latency of V2X devices and solving resource conflicts. V2X comprises several specific application requirements, including direct communication between vehicles (V2V), communication between vehicles and infrastructure (V2I), communication between vehicles and pedestrians (V2P), and communication and interaction between vehicles and networks (V2N). V2V refers to communication between vehicles; V2P refers to the communication between vehicles and people (including pedestrians, cyclists, drivers or passengers); V2I refers to the communication between vehicles and network devices, such as RSUs. Additionally, there is another type of V2N that can be comprised in V2I, V2N refers to the communication between vehicles and base stations/networks.

Wireless connections can be established between network devices 120 and terminal devices 110 through wireless air interfaces.

For example, end to end (E2E) connections can also be established between terminal devices 110.

In some embodiments, the communication system may also comprise a network management device 130. a plurality of network devices 120 (base stations) are individually connected to the network management device 130. the network management device 130 can be a core network device in wireless communication systems, for example, the network management device 130 can be a Mobility Management Entity (MME) in the Evolved Packet Core (EPC). Alternatively, the network management device can also be any other core network device, such as a 5G core network, a Service GateWay (SGW), a Public Data Network GateWay (PGW), a Policy and Charging Rule Function (PCRF) Unit or a Home Subscriber Server (HSS). The execution form of the network management device 130 is not limited by the embodiment of the application.

In this context, 5G NR Rel-16 V2X is the continued evolution of Rel-14/Rel-15 LTE V2X. It is designed to provide more reliable, lower-latency, and higher data rate vehicular communication services on sidelink. NR Rel-16 introduces the Sidelink Hybrid Automatic Repeat Request (SL HARQ) function, which comprises two modes: SLHARQ Option 1 (NACK or ACK full feedback) and SLHARQ Option 2 (NACK feedback only). a plurality of continuous SL HARQ NACK feedback can indirectly reflect the persistent resource collision caused by UE using random resource selection working mode due to the transmission of low priority data. If the UE that adopts a random resource selection working mode reselects the resource, due to the lack of sensing, it will largely trigger persistent resource collisions again.

Therefore, the embodiment of this application proposes a wireless communication method that adjusts the priority of sending data from UEs using random resource selection based on the frequency of SL HARQ NACK feedback. This adjustment helps UEs using random resource selection to transmit quickly, release occupied resources, and avoid causing persistent interference to UEs based on sensing. This, in turn, improves the overall transmission efficiency of the resource pool.

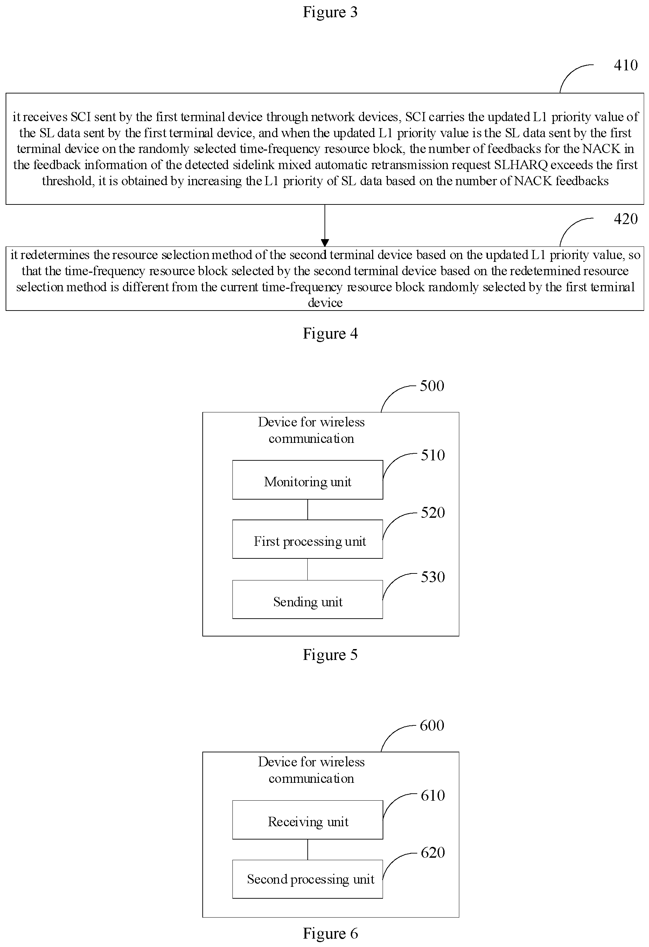

Please refer to Figures 2 to 3. Figure 2 is the flowchart of the method for wireless communication provided in the embodiment of the application, and Figure 3 is the schematic diagram of the application scenario provided in the embodiment of the application. The method is applied to the first terminal device, which can be a device based on random resource selection (RRS-UE). The method comprises the following steps:
Step 210: When the first terminal device sends sidelink (SL) data on randomly selected time-frequency resource blocks, it monitors the feedback information of SL HARQ on the Physical Sidelink Feedback Channel (PSFCH). The feedback information of SL HARQ comprises the number of unconfirmed signal NACK feedbacks.

As shown in Figure 3 in the Sidelink Resource Pool (SL Resource Pool), the resources in the resource selection window are associated with one or a plurality of resources in the sensing window. Sensing-UE (device based on sensing resource selection) monitors the Reference Signal Received Power (RSRP) on the associated resources in the sensing window. If the RSRP exceeds a certain threshold, this resource is considered to have significant interference and is excluded from the candidate resource pool. Finally, Sensing-UE selects a resource from the filtered candidate resource pool for sending. The RRS-UE (a device based on random resource selection) does not perform any sensing but only randomly selects a resource from the random resource window for sending. Therefore, it has a higher probability of occupying the same resource as other UEs, causing resource collisions and significant interference.

So, when the first terminal device, acting as an RRS-UE, sends sidelink (SL) data on randomly selected time-frequency resource blocks, it monitors the feedback information of SL HARQ on the Physical Sidelink Feedback Channel (PSFCH). The feedback information of SL HARQ comprises the number of unconfirmed signal NACK feedback.

SL is the communication link between UEs. SL can be used for the direct transmission between terminals without network devices.

Step 220: When it is detected that the number of NACK feedback in the feedback information exceeds the first threshold, the first layer (L1) priority of the SL data is increased based on the number of NACK feedback, resulting in an updated L1 priority value.

In some embodiments, the lower the L1 priority value is, the higher the L1 priority will be.

In some embodiments, the first threshold can be configured at a higher priority based on the first terminal device.

A pre-configured NACK feedback times threshold is called as the first threshold which can be issued through higher-priority signaling. When the first terminal device (random resource selection device) detects that the number of NACK feedback times in the SL HARQ feedback information is greater than the first threshold, the first terminal device (random resource selection device) will judge that a persistent resource collision occurs. For example, higher-priority signaling can be the signaling of SL Resource Pool Configuration. The first threshold can be configured by the base station side or by the higher priority of the random resource selection device itself (pre-configured), both of which are issued through higher-priority signaling. The first threshold is a positive integer not greater than 32. The base station or terminal device UE in the vehicle networking system can configure the first threshold according to different actual conditions such as channel conditions and latency requirements.

In some embodiments, the more NACK feedbacks received, the smaller the updated L1 priority value, and the higher the updated L1 priority.

In some embodiments, increasing the first layer (L1) priority of the SL data based on the number of NACK feedbacks to obtain an updated L1 priority value comprises raising the L1 priority of the SL data by X levels based on the number of NACK feedbacks.

In some embodiments, increasing the L1 priority of the SL data by X levels based on the number of NACK feedbacks comprises: if the number of NACK feedbacks exceeds X by N times, then X is increased by 1, where N is a positive integer.

For example, when the first terminal device (random resource selection device) detects that the number of SL HARQ NACK feedbacks is greater than the first threshold, the first terminal device (random resource selection device) raises the L1 priority of sending data by X levels to adjust the original L1 priority value P1 to the updated L1 priority value P1-X, where X is a positive integer. For example, the original L1 priority value is P1, and the updated L1 priority value is P1-X. The lower the priority value is, the higher the priority will be.

P1-X represents P1 minus X, that is, if the priority of L1 needs to be raised by X levels, the original priority value needs to be subtracted by X. The smaller the priority value is, the higher the priority will be.

Furthermore, the greater the number of SL HARQ NACK feedback is, the greater the X will be, and the higher the updated L1 priority will be. For example, when the number of NACK feedbacks are greater than N, it will be X plus 1, N is a positive integer. For example, when N is set to 1, if NACK feedback occurs 1 more time, then X will increase by 1. For example, when N is set to 2, and the number of NACK feedbacks are greater than 2, then X increases by 1.

For example, L1 priority can refer to the L1 priority described in the communication standard protocol 3GPP TS38.214. For example, X can be a non-negative integer from 0 to 7. As communication standard protocols evolve, it is possible that more priorities will be introduced in the future, potentially expanding the range of X.

Step 230, it sends SCI to a second terminal device through network devices, SCI carries the updated L1 priority value, and SCI is used to indicate that the second terminal device redetermines the resource selection method of the second terminal device based on the updated L1 priority value, and make the time-frequency resource block selected by the second terminal device based on the redetermined resource selection method different from the current time-frequency resource block randomly selected by the first terminal device.

In some embodiments, the SCI is used to indicate that the second terminal device should re-evaluate its resource selection method based on the updated L1 priority value. This comprises the following steps: The SCI is used to instruct the second terminal device to re-evaluate its resource selection method based on the relationship between the updated L1 priority value and the L1 priority value of the second terminal device.

For example, the first terminal device (RRS-UE) sends SCI to the network device, which is used to indicate the updated L1 priority value P1-X. When the updated L1 priority value P1-X is less than the L1 priority value P2 of the second terminal device (based on the sensing resource selection device Sensing-UE), and the updated L1 priority of the first terminal device is higher than the L1 priority of the second terminal device, the second terminal device (based on the sensing resource selection device) reselects resources through sensing, in order to make the time-frequency resource block selected by the second terminal device based on the redetermined resource selection method (reselect resources by sensing) different from the current time-frequency resource block randomly selected by the first terminal device, effectively avoiding the time-frequency resources occupied by the first terminal device (random resource selection device) and reducing interference with the first terminal device (random resource selection device), and enable the first terminal device (random resource selection device) to as soon as possible complete data transmission and release the occupied resources. In more detail, in the context of SL (Sidelink) communication between UEs, when a Sensing-UE receives SCI from an RRS-UE within the same resource pool, it compares the L1 priority value P1-X carried in the SCI with its own L1 priority value P2. If P1-X is lower than P2, it indicates that the RRS-UE's updated L1 priority is higher. Therefore, the Sensing-UE should proactively relinquish resources to the RRS-UE. In response, the higher layers of the Sensing-UE instruct its physical layer to perform sensing again to acquire alternative resources. The time-frequency resource block obtained through this re-sensing process will be different from the one currently selected by the RRS-UE.

In the context of NR-V2X, SCI consists of two phases: the first phase of SCI is transmitted on the PSCCH, and the second phase of SCI is transmitted on the PSSCH.

For example, if P1-X equals P2, this signifies that the updated L1 priority of the RRS-UE is identical to the L1 priority of the Sensing-UE. In this scenario, the Sensing-UE must proactively yield resources to the RRS-UE before the RRS-UE completes its data transmission. At this juncture, it can also initiate a new sensing process. Consequently, the higher-priority components of the Sensing-UE send a new sensing instruction to its physical layer to regain alternative resources. The time-frequency resource block obtained by the Sensing-UE differs from the time-frequency resource block randomly selected by the RRS-UE.

For example, if P1-X equals P2, indicating that the updated L1 priority of the RRS-UE is equivalent to the L1 priority of the Sensing-UE, the Sensing-UE needs to yield resources to the RRS-UE before the completion of data transmission by the RRS-UE. In this case, the Sensing-UE can choose not to initiate a new sensing process but instead send a transmission status reporting request to the RRS-UE. This request instructs the RRS-UE to send a transmission completion notification to the Sensing-UE upon finishing data transmission. The Sensing-UE remains in a waiting state until it receives this transmission completion notification, and it only engages in data transmission upon receipt.

All the above technical solutions can adopt any combination of any optional embodiments of the application, which will not be repeated here.

In the embodiment of the application, when the first terminal device sends SL data on a randomly selected time-frequency resource block, it monitors the feedback information of SL HARQ on PSFCH. The feedback information of SL HARQ comprises the number of NACK feedbacks. When it detects that the number of NACK feedbacks in the feedback information is greater than the first threshold, it increases the L1 priority of SL data based on the number of NACK feedbacks and obtains the updated L1 priority value. SCI is sent to the second terminal device through the network devices. SCI carries the updated L1 priority value. SCI is used to indicate that the second terminal device re-determines the resource selection method of the second terminal device based on the updated L1 priority value, and make the time-frequency resource block selected by the second terminal device based on the redetermined resource selection method different from the currently time-frequency resource block randomly selected by the first terminal device. The embodiment of the application adjusts the priority of data sent by the first terminal device based on the NACK feedbacks of SL HARQ feedback information, so that the second terminal device redetermines the resource selection method of the second terminal device based on the updated L1 priority value, so that the resources selected by the second terminal device avoid conflicts with the resource selection of the first terminal device, and then the first terminal device can complete the transmission as soon as possible, releasing the resources occupied by the first terminal device as soon as possible and effectively avoiding persistent resource collisions and improving the transmission efficiency of the resource pool.

Please refer to Figure 4, Figure 4 is another flowchart of the method for wireless communication provided in the embodiment of the application. The method is applied to the second terminal device, which can be a device based on sensing resource selection (Sensing-UE). The method comprises the following steps:
Step 410, it receives SCI sent by the first terminal device through network devices, SCI carries the updated L1 priority value of the SL data sent by the first terminal device, and when the updated L1 priority value is the SL data sent by the first terminal device on the randomly selected time-frequency resource block, the number of feedbacks for the NACK in the feedback information of the detected sidelink mixed automatic retransmission request SLHARQ exceeds the first threshold, it is obtained by increasing the L1 priority of SL data based on the number of NACK feedbacks.

For example, when the first terminal device sends SL data on a randomly selected time-frequency resource block, it monitors the feedback information of SL HARQ on PSFCH. The feedback information of SL HARQ comprises the number of NACK feedbacks. When the number of NACK feedbacks detected in the feedback information exceeds the first threshold, the L1 priority of SL data is increased based on the number of NACK feedbacks, resulting in an updated L1 priority value. It's important to note that the smaller the L1 priority value, the higher the L1 priority will be. Following this, network devices transmit Sidelink Control Information (SCI) to the second terminal device, where the SCI carries the updated L1 priority value. The SCI is used to instruct the second terminal device to perform resource avoidance against the first terminal device based on the updated L1 priority value. Then, the second terminal device receives SCI sent by the first terminal device through the network devices, so that the second terminal device can adjust its resource selection method based on the received SCI.

Step 420, it redetermines the resource selection method of the second terminal device based on the updated L1 priority value, so that the time-frequency resource block selected by the second terminal device based on the redetermined resource selection method is different from the current time-frequency resource block randomly selected by the first terminal device.

In some embodiments, the resource selection method of the second terminal device is redetermined based on the updated L1 priority value, which comprises the following steps: the resource selection method of the second terminal device is redetermined based on the relationship between the updated L1 priority value and the L1 priority value of the second terminal device.

For example, after receiving SCI, the second terminal device (Sensing-UE) compares the updated L1 priority value P1-X of the first terminal device (RRS-UE) with the L1 priority value of the second terminal device (Sensing-UE). It then redefines the resource selection method of the second terminal device (Sensing-UE) based on the comparison results. This ensures that the time-frequency resource block selected by the second terminal device, following the redetermined resource selection method, is different from the one currently randomly selected by the first terminal device. Consequently, the second terminal device (Sensing-UE) can avoid resource conflicts with the first terminal device (RRS-UE) based on the currently randomly selected time-frequency resource block, thus ensuring that the resources selected by the second terminal device do not interfere with those selected by the first terminal device.

In some embodiments, the resource selection method of the second terminal device is redetermined based on the relationship between the updated L1 priority value and the L1 priority value of the second terminal device, which comprises the following steps: if the updated L1 priority value is less than the L1 priority value of the second terminal device, it determines that the updated L1 priority is higher than the L1 priority of the second terminal device, and also determines that the resource selection method for the second terminal device is to initiate new sensing.

For example, when the updated L1 priority value P1-X is less than the L1 priority value P2 of the second terminal device (based on the sensing resource selection device Sensing-UE), and the updated L1 priority of the first terminal device is higher than the L1 priority of the second terminal device, the second terminal device (based on the sensing resource selection device) reselects resources through sensing, in order to make the time-frequency resource block selected by the second terminal device based on the redetermined resource selection method (reselect resources by sensing) different from the current time-frequency resource block randomly selected by the first terminal device, effectively avoiding the time-frequency resources occupied by the first terminal device (random resource selection device) and reducing interference with the first terminal device (random resource selection device), and enable the first terminal device (random resource selection device) to as soon as possible complete data transmission and release the occupied resources. In more detail, in the context of SL (Sidelink) communication between UEs, when a Sensing-UE receives SCI from an RRS-UE within the same resource pool, it compares the L1 priority value P1-X carried in the SCI with its own L1 priority value P2. If P1-X is lower than P2, it indicates that the RRS-UE's updated L1 priority is higher. Therefore, the Sensing-UE should proactively relinquish resources to the RRS-UE. In response, the higher layers of the Sensing-UE instruct its physical layer to perform sensing again to acquire alternative resources. The time-frequency resource block obtained through this re-sensing process will be different from the one currently selected by the RRS-UE.

In some embodiments, the resource selection method of the second terminal device is redetermined based on the relationship between the updated L1 priority value and the L1 priority value of the second terminal device, which comprises the following steps: if the updated L1 priority value is equal to the L1 priority value of the second terminal device, it determines that the updated L1 priority is higher than the L1 priority of the second terminal device, and also determines that the resource selection method for the second terminal device is to initiate new sensing.

For example, if P1-X equals P2, this signifies that the updated L1 priority of the RRS-UE is identical to the L1 priority of the Sensing-UE. In this scenario, the Sensing-UE must proactively yield resources to the RRS-UE before the RRS-UE completes its data transmission. At this juncture, it can also initiate a new sensing process. Consequently, the higher-priority components of the Sensing-UE send a new sensing instruction to its physical layer to regain alternative resources. The time-frequency resource block obtained by the Sensing-UE differs from the time-frequency resource block randomly selected by the RRS-UE.

In some embodiments, the resource selection method of the second terminal device is redefined based on the relationship between the updated L1 priority value and the L1 priority value of the second terminal device. This comprises the following steps: If the updated L1 priority value is equal to the L1 priority value of the second terminal device, it determines that the updated L1 priority is equal to the L1 priority of the second terminal device. Subsequently, it confirms that the resource selection method for the second terminal device does not initiate new sensing. Furthermore, it sends a transmission status report request to the first terminal device, indicating that the first terminal device should send a transmission completion notification when data transmission is completed. The second terminal device remains in a waiting state until it receives the transmission completion notification, at which point it proceeds with data transmission using the randomly selected resource selection method.

For example, if P1-X equals P2, indicating that the updated L1 priority of the RRS-UE is equivalent to the L1 priority of the Sensing-UE, the Sensing-UE needs to yield resources to the RRS-UE before the completion of data transmission by the RRS-UE. In this case, the Sensing-UE can choose not to initiate a new sensing process but instead send a transmission status reporting request to the RRS-UE. This request instructs the RRS-UE to send a transmission completion notification to the Sensing-UE upon finishing data transmission. The Sensing-UE remains in a waiting state until it receives this transmission completion notification, and it only engages in data transmission upon receipt.

All the above technical solutions can adopt any combination of any optional embodiments of the application, which will not be repeated here.

The embodiment of the application receives SCI sent by the first terminal device through network devices, SCI carries the updated L1 priority value of the SL data sent by the first terminal device, and when the updated L1 priority value is the SL data sent by the first terminal device on the randomly selected time-frequency resource block, and when the number of NACK feedbacks in the feedback information of SL HARQ is greater than the first threshold, it is obtained by increasing the L1 priority of SL data based on the number of NACK feedbacks. Then it redetermines the resource selection method of the second terminal device based on the updated L1 priority value, so that the time-frequency resource block selected by the second terminal device based on the redetermined resource selection method is different from the current time-frequency resource block randomly selected by the first terminal device. The embodiment of the application adjusts the priority of data sent by the first terminal device based on the NACK feedbacks of SL HARQ feedback information, so that the second terminal device redetermines the resource selection method of the second terminal device based on the updated L1 priority value, so that the resources selected by the second terminal device avoid conflicts with the resource selection of the first terminal device, and then the first terminal device can complete the transmission as soon as possible, releasing the resources occupied by the first terminal device as soon as possible and effectively avoiding persistent resource collisions and improving the transmission efficiency of the resource pool.

For the convenience of better implementing the method for wireless communication of the embodiment of the application, the embodiment of the application also provides a device for wireless communication. Please refer to Figure 5, Figure 5 is the schematic diagram of the structure of the device for wireless communication provided in the embodiment of the application. The device 500 for wireless communication comprises:
a monitoring unit 510, which is used to monitor the feedback information of the sidelink mixed automatic retransmission request SL HARQ on the physical sidelink feedback channel PSFCH when the first terminal device sends SL data on a randomly selected time-frequency resource block. The feedback information of the SL HARQ comprises the number of NACK feedbacks;
a first processing unit 520, which is used to increase the L1 priority lof SL data based on the number of NACK feedbacks when it is detected that the number of NACK feedbacks in the feedback information exceeds the first threshold, and then the updated L1 priority value is obtained;
a transmission unit 530, which transmits SCI to a second terminal device through network devices, SCI carries the updated L1 priority value, and SCI is used to indicate that the second terminal device redetermines the resource selection method of the second terminal device based on the updated L1 priority value, and make the time-frequency resource block selected by the second terminal device based on the redetermined resource selection method different from the current time-frequency resource block randomly selected by the first terminal device.

In some embodiments, the lower the L1 priority value is, the higher the L1 priority will be.

In some embodiments, the more NACK feedbacks received, the smaller the updated L1 priority value, and the higher the updated L1 priority.

In some embodiments, the first processing unit 520, when increasing the L1 priority of the SL data by X levels based on the number of NACK feedbacks to obtain the updated L1 priority value, can do so by raising the L1 priority of the SL data by X levels according to the number of NACK feedbacks.

In certain embodiments, the first processing unit 520, when increasing the L1 priority of the SL data by X levels based on the number of NACK feedbacks, can do so by controlling X to increase by 1 if the number of NACK feedbacks is N more than X, where N is a positive integer.

In some embodiments, the SCI is used to indicate that the second terminal device should re-evaluate its resource selection method based on the updated L1 priority value. This comprises the following steps: The SCI is used to instruct the second terminal device to re-evaluate its resource selection method based on the relationship between the updated L1 priority value and the L1 priority value of the second terminal device.

In some embodiments, the first processing unit 520 is also used to configure the first threshold at a higher priority based on the first terminal device.

Please refer to Figure 6, Figure 6 is the schematic diagram of the structure of the device for wireless communication provided in the embodiment of the application. The device 600 for wireless communication comprises the following:
a receiving unit 610, which is used to receive SCI sent by the first terminal device through network devices, SCI carries the updated L1 priority value of the SL data sent by the first terminal device, and when the updated L1 priority value is the SL data sent by the first terminal device on the randomly selected time-frequency resource block, the number of feedbacks for the NACK in the feedback information of the detected sidelink mixed automatic retransmission request SLHARQ exceeds the first threshold, it is obtained by increasing the L1 priority of SL data based on the number of NACK feedbacks;
and a second processing unit 620, which is used to redetermine the resource selection method of the second terminal device based on the updated L1 priority value, so that the time-frequency resource block selected by the second terminal device based on the redetermined resource selection method is different from the current time-frequency resource block randomly selected by the first terminal device.

In some embodiments, the second processing unit 620 is specifically used to redetermine the resource selection method of the second terminal device based on the relationship between the updated L1 priority value and the L1 priority value of the second terminal device, enabling the second terminal device to perform resource avoidance based on the time-frequency resource block randomly selected by the first terminal device.

In some embodiments, the resource selection method of the second terminal device is redetermined by the second processing unit 620 based on the relationship between the updated L1 priority value and the L1 priority value of the second terminal device, which comprises the following steps: if the updated L1 priority value is less than the L1 priority value of the second terminal device, it determines that the updated L1 priority is higher than the L1 priority of the second terminal device, and also determines that the resource selection method for the second terminal device is to initiate new sensing.

In some embodiments, the resource selection method of the second terminal device is redetermined by the second processing unit 620 based on the relationship between the updated L1 priority value and the L1 priority value of the second terminal device, which comprises the following steps: if the updated L1 priority value is equal to the L1 priority value of the second terminal device, it determines that the updated L1 priority is equal to the L1 priority of the second terminal device, and also determines that the resource selection method for the second terminal device is to initiate new sensing.

In some embodiments, the resource selection method of the second terminal device is redetermined by the second processing unit 620 based on the relationship between the updated L1 priority value and the L1 priority value of the second terminal device, which can be used for the following: if the updated L1 priority value is equal to the L1 priority value of the second terminal device, it determines that the updated L1 priority is equal to the L1 priority of the second terminal device, and also determines that the resource selection method for the second terminal device is to not initiate any new sensing; It sends a transmission status report request to the first terminal device, which is used to indicate that the first terminal device sends a transmission completion notification to the second terminal device when completing data transmission; Before receiving the transmission completion notification, it remains in a waiting state until the data is transmitted through random resource selection upon receiving the transmission completion notification.

All the above technical solutions can adopt any combination of any optional embodiments of the application, which will not be repeated here.

It should be understood that the device embodiment and the method embodiment can correspond to each other, and similar descriptions can be referenced from the method embodiment. It is not repeated here to avoid repetition. Specifically, the device depicted in Figure 5 or Figure 6 can implement the wireless communication method embodiments described above. Each unit within the device performs the corresponding processes of the method embodiments, including the aforementioned and other operations and/or functions. To keep this concise, we will not repeat them here.

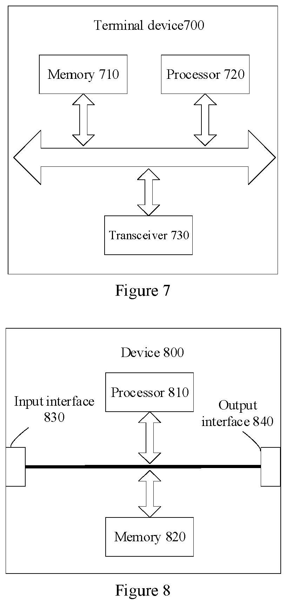

Figure 7 is a schematic structural diagram of a terminal device provided by an embodiment of the present application. The terminal device 700 shown in Figure 7 comprises a processor 710 which can call and run computer programs from memory to execute the method in the embodiments of the application.

In some embodiments, as shown in Figure 7, the terminal device 700 can also comprise a memory 720, the processor 710 can call and run computer programs from the memory 720 to execute the method in the embodiments of the application.

The memory 720 can be a separate device independent of the processor 710 or integrated into the processor 710.

In some embodiments, as shown in Figure 7, the terminal device 700 may further comprise a transceiver 730, the processor 710 may control the transceiver 730 to communicate with other devices. Specifically, it can send information or data to other devices, or receive information or data sent by other devices.

The transceiver 730 can comprise a transmitter and a receiver. The transceiver 730 may further comprise one or a plurality of antennas.

In some embodiments, the terminal device 700 may execute the corresponding processes executed by the first or second terminal device in the methods of the embodiments of the application. For simplicity, these processes are not repeated here.

Figure 8 is the schematic diagram of the structure of the device provided in the embodiment of the application. The device 800 shown in Figure 8 comprises a processor 810. The processor 810 can call and run computer programs from the memory to execute the methods in the embodiments of the application.

In some embodiments, as shown in Figure 8, the device 800 can also comprise a memory 820, the processor 810 can call and run computer programs from the memory 820 to execute the method in the embodiments of the application.

The memory 820 can be a separate device independent of the processor 810 or integrated into the processor 810.

In some embodiments, the device 800 may also comprise an input interface 830, the processor 810 may control the input interface 830 to communicate with other devices or chips. Specifically, it can obtain information or data sent by other devices or chips.

In some embodiments, the device 800 may also comprise an output interface 840, the processor 810 may control the output interface 840 to communicate with other devices or chips. Specifically to output information or data to other devices or chips. In some embodiments, the device may be applied to the terminal device in the embodiments of the application, and the device may execute the corresponding processes executed by the first or second terminal device in the methods of the embodiments of the application. For simplicity, these processes are not repeated here.

In some embodiments, the device mentioned in the embodiments of the application may also be a chip. For example, it can be a system level chip, system chip, on-chip system, or on-chip system chip.

It should be understood that the processor of the embodiments of the application may be an integrated circuit chip with signal processing capabilities. During the execution process, all steps of the above embodiments of the method can be completed through integrated logic circuits in the hardware of the processor or instructions in the form of software. The above-mentioned processors can be general-purpose processors, digital signal processor (DSP), application specific integrated circuit (ASIC), field programmable gate array (FPGA) or other programmable logic devices, discrete gates or transistor logic devices, and discrete hardware components. The disclosed methods, steps and logical diagrams in the embodiments of the application can be implemented or executed. The general-purpose processor can be a microprocessor or any conventional processor. The steps of the methods disclosed in the embodiments of the application can be directly reflected in the completion of the hardware decoding processor execution, or the completion of the combination of hardware and software modules in the decoding processor execution. The software modules can be located in mature storage media in this field, such as random-access memory, flash memory, read-only memory, programmable read-only memory, or electrically erasable programmable memory, registers, etc. The storage medium is located within the memory, and the processor reads the information from the memory. It combines this information with its hardware to complete the steps of the above method.

It should be understood that the memory in the embodiments of the application can be volatile memory, non-volatile memory, or both. the non-volatile memory can be a read-only memory (ROM), a programmable read-only memory (PROM), an erasable programmable read-only memory (EPROM), an electrically erasable programmable read-only memory (EEPROM), or a flash memory. The volatile memory can be Random Access Memory (RAM) used as external high-speed cache. By way of example but not limiting description, many forms of RAMs are available, such as Static Random-access memory (SRAM), Dynamic Random-access memory (DRAM), Synchronous Dynamic Random-access memory (SDRAM), Double Data Rate Synchronous Dynamic Random-access memory (DDR SDRAM), Enhanced Synchronous Dynamic Random-access memory (ESDRAM), Synchlink DRAM (SLDRAM), and Direct Rambus RAM (DR RAM). It should be noted that the memories of the system and method described in the application are intended to comprise but not limited to these and any other suitable types of memories.

It should be understood that the above-mentioned memory is an example but not limiting description. For example, the memory in the embodiments of the application can also be the Static Random-access memory (SRAM), Dynamic Random-access memory (DRAM), Synchronous Dynamic Random-access memory (SDRAM), Double Data Rate Synchronous Dynamic Random-access memory (DDR SDRAM), Enhanced Synchronous Dynamic Random-access memory (ESDRAM), Synchlink DRAM (SLDRAM), and Direct Rambus RAM (DR RAM). It means that the memories in the embodiments of the application are intended to comprise but not limited to these and any other suitable types of memories.

The embodiment of the application also provides a computer readable storage medium for storing computer programs.

In some embodiments, the computer readable storage medium may be applied to the terminal device in the embodiments of the application, and the computer program make the computer execute the corresponding processes executed by the first or second terminal device in the methods of the embodiments of the application. For simplicity, these processes are not repeated here.

The embodiment of the application also provides a computer program product, including computer program instructions.

In some embodiments, the computer program product may be applied to the terminal device in the embodiments of the application, and the computer program instructions make the computer execute the corresponding processes executed by the first or second terminal device in the methods of the embodiments of the application. For simplicity, these processes are not repeated here.
he present application embodiment also provides a computer program.

In some embodiments, the computer program may be applied to the terminal device in the embodiments of the application, and when the computer program runs on the computer, the computer executes the corresponding processes executed by the first or second terminal device in the methods of the embodiments of the application. For simplicity, these processes are not reiterated here.

The ordinary technicians in this field can realize that the units and algorithm steps of each embodiment described in the disclosed embodiments can be executed in electronic hardware, or the combination of computer software and electronic hardware. These functions are executed by hardware or software based on the specific application and design constraints of the technical solution. Professional technicians may use different methods to achieve the described functions for each specific application, but it should not be considered beyond the scope of the application.

The technicians in the field should clearly understand that for the convenience and conciseness of the description, the specific working processes of the systems, devices and units described above can refer to the corresponding processes in the aforementioned embodiments, which will not be repeated here.

In the embodiments provided in the application, it should be understood that the disclosed systems, devices and methods can be implemented in other ways. For example, the device embodiments described above are purely illustrative. For instance, the division of units or modules is just one logical function division, and there may be other ways of division in actual implementation. For example, a plurality of units, modules, or components can be combined or integrated into another system, or certain features can be omitted or not executed. In addition, the mutual coupling or direct coupling or communication connection which is displayed or discussed can be achieved through the indirect coupling or communication connection of some interfaces, devices or units, which can be in electrical, mechanical or other forms.

The units or modules described as separate components may or may not be physically separated. The components displayed as units or modules can be or may not be physical units. They can be located in one place or distributed across a plurality of network units. Some or all of the units or modules can be selected as needed to achieve the objectives of this embodiment.

In addition, in each functional unit or module of various embodiments of the application, they can be integrated into one processing unit or module or exist physically separately. They can also be two or a plurality of units integrated into one unit or two or a plurality of modules integrated into one module.

When implemented in the form of software functional units or modules and sold or used as independent products, the functions can be stored in a computer-readable storage medium. In response to such understanding, the essential part of the technical solution of the application or the part that contributes to the existing technology can be embodied in the form of a software product. The computer software product is stored in a storage medium, including a plurality of instructions to enable a computer device (which can be a personal computer, server, or network device, etc.) to perform all or part of the steps of the methods described in each embodiment of the application. The aforementioned storage media comprise USB flash drives, portable hard drives, Read Only Memory (ROM), Random Access Memory (RAM), disks or CDs, and other media that can store program codes.

The above content is only the specific implementation method of the application, but the scope of protection of the application is not limited by it. Any technical personnel familiar with the technical field within the disclosed technical scope of the application can easily make changes or replacements, which should be covered within the scope of protection of the application. Therefore, the scope of protection for this application should be determined based on the scope of protection as defined in the claims.

## Claims

1. A method used for wireless communication, comprising:
it monitors the feedback information of the sidelink mixed automatic retransmission request SL HARQ on the physical sidelink feedback channel PSFCH when the first terminal device sends SL data on a randomly selected time-frequency resource block. The feedback information of the SL HARQ comprises the number of NACK feedbacks;
When it is detected that the number of NACK feedbacks in the feedback information exceeds the first threshold, the L1 priority of the SL data is increased based on the number of NACK feedbacks, resulting in an updated L1 priority value:
it sends SCI to a second terminal device through network devices, SCI carries the updated L1 priority value, and SCI is used to indicate that the second terminal device redetermines the resource selection method of the second terminal device based on the updated L1 priority value, and make the time-frequency resource block selected by the second terminal device based on the redetermined resource selection method different from the current time-frequency resource block randomly selected by the first terminal device.

2. According to the method for wireless communication in claim 1, the lower the L1 priority value is, the higher the L1 priority will be.

3. According to the method for wireless communication in claim 2, the greater the number of NACK feedbacks, the smaller the updated L1 priority value will be, and the higher the updated L1 priority will be.

4. The method for wireless communication according to claim 3, it increases the L1 priority of the SL data based on the number of NACK feedbacks to obtain the updated L1 priority value, which comprises the following steps:
The L1 priority of the SL data is increased by X levels based on the number of NACK feedbacks.

5. The method for wireless communication according to claim 4, it increases the L1 priority of the SL data by X levels based on the number of NACK feedbacks, which comprises the following steps:
If the number of NACK feedback is N times more than X, then X is controlled to increase by 1, where N is a positive integer.

6. The method for wireless communication according to claim 1, SCI is used to instruct the second terminal device to redetermine the resource selection method of the second terminal device based on the updated L1 priority value, which comprises the following steps:
Using SCI to indicate that the second terminal device should redetermine the resource selection method based on the relationship between the updated L1 priority value and the L1 priority value of the second terminal device.

7. The method for wireless communication according to claim 1, which further comprises the following:
The first threshold is configured based on a higher layer of the first terminal device.

8. A method used for wireless communication, comprising:
it receives SCI sent by the first terminal device through network devices, SCI carries the updated L1 priority value of the SL data sent by the first terminal device, and when the updated L1 priority value is the SL data sent by the first terminal device on the randomly selected time-frequency resource block, the number of feedbacks for the NACK in the feedback information of the detected sidelink mixed automatic retransmission request SLHARQ exceeds the first threshold, it is obtained by increasing the L1 priority of SL data based on the number of NACK feedbacks;
and it redetermines the resource selection method of the second terminal device based on the updated L1 priority value, so that the time-frequency resource block selected by the second terminal device based on the redetermined resource selection method is different from the current time-frequency resource block randomly selected by the first terminal device.

9. The method for wireless communication according to claim 8, it redetermines the resource selection method of the second terminal device based on the updated L1 priority value, which comprises the following steps:
Redetermines the resource selection method of the second terminal device based on the relationship between the updated L1 priority value and the L1 priority value of the second terminal device.

10. The method for wireless communication according to claim 9, it redetermines the resource selection method of the second terminal device based on the relationship between the updated L1 priority value and the L1 priority value of the second terminal device, which comprises the following steps:
If the updated L1 priority value is less than the L1 priority value of the second terminal device, it determines that the updated L1 priority is higher than the L1 priority of the second terminal device;
The method of resource selection for the second terminal device is determined to be initiated through re-sensing.

11. The method for wireless communication according to claim 9, it redetermines the resource selection method of the second terminal device based on the relationship between the updated L1 priority value and the L1 priority value of the second terminal device, which comprises the following steps:
If the updated L1 priority value is equal to the L1 priority value of the second terminal device, it determines that the updated L1 priority is equal to the L1 priority of the second terminal device;
The method of resource selection for the second terminal device is determined to be initiated through re-sensing.

12. The method for wireless communication according to claim 9, it redetermines the resource selection method of the second terminal device based on the relationship between the updated L1 priority value and the L1 priority value of the second terminal device, which comprises the following steps:
If the updated L1 priority value is equal to the L1 priority value of the second terminal device, it determines that the updated L1 priority is equal to the L1 priority of the second terminal device;
The method for determining the resource selection method of the second terminal device is to not initiate new sensing;
It sends a transmission status report request to the first terminal device, which is used to indicate that the first terminal device sends a transmission completion notification to the second terminal device when completing data transmission;
It remains in a waiting state until receiving the transmission completion notification, and only then does it transmit data through a random resource selection method when it receives the transmission completion notification.

13. A device used for wireless communication, comprising the following:
a monitoring unit, which is used to monitor the feedback information of the sidelink mixed automatic retransmission request SL HARQ on the physical sidelink feedback channel PSFCH when the first terminal device sends SL data on a randomly selected time-frequency resource block. The feedback information of the SL HARQ comprises the number of NACK feedbacks;
a first processing unit, which is used to increase the L1 priority of SL data based on the number of NACK feedbacks when it is detected that the number of NACK feedbacks in the feedback information exceeds the first threshold, and then the updated L1 priority value is obtained;
a transmission unit, which transmits SCI to a second terminal device through network devices, SCI carries the updated L1 priority value, and SCI is used to indicate that the second terminal device redetermines the resource selection method of the second terminal device based on the updated L1 priority value, and make the time-frequency resource block selected by the second terminal device based on the redetermined resource selection method different from the current time-frequency resource block randomly selected by the first terminal device.

14. A device used for wireless communication, comprising the following:
a receiving unit, which is used to receive SCI sent by the first terminal device through network devices, SCI carries the updated L1 priority value of the SL data sent by the first terminal device, and when the updated L1 priority value is the SL data sent by the first terminal device on the randomly selected time-frequency resource block, the number of feedbacks for the NACK in the feedback information of the detected sidelink mixed automatic retransmission request SLHARQ exceeds the first threshold, it is obtained by increasing the L1 priority of SL data based on the number of NACK feedbacks;
a second processing unit, which is used to redetermine the resource selection method of the second terminal device based on the updated L1 priority value, so that the time-frequency resource block selected by the second terminal device based on the redetermined resource selection method is different from the current time-frequency resource block randomly selected by the first terminal device.

15. A terminal device, configured to, which comprises a processor and a memory. The memory is used to store computer programs, and the processor is used to call and run the computer programs stored in the memory and execute the method for wireless communication according to any one of claims 1 to 7 or execute the method for wireless communication according to any one of claims 8 to 12.

16. A chip, configured to, which comprises a processor for calling and running a computer program from the memory, so that the device with the chip executes the method for wireless communication according to any one of claims 1 to 7, or the method for wireless communication according to any one of claims 8 to 12.

17. A computer readable storage medium, configured to, which stores computer programs. The computer programs are suitable for processor loading to execute the method for wireless communication according to any one of claims 1 to 7, or to execute the method for wireless communication according to any one of claims 8 to 12.

18. A computer program product, configured to, which comprises computer program instructions. The computer program instructions enable the computer to execute the method for wireless communication according to any one of claims 1 to 7, or to execute the method for wireless communication according to any one of claims 8 to 12.

19. A computer program, configured to, which enables the computer to execute the method for wireless communication according to any one of claims 1 to 7, or to execute the method for wireless communication according to any one of claims 8 to 12.
